# EUROPÄISCHE PATENTSCHRIFT

(11) **EP 3 400 429 B1**
(45) Veröffentlichungstag und Bekanntmachung des Hinweises auf die Patenterteilung: **14.10.2020**
(21) Anmeldenummer: 16819050.2
(22) Anmeldetag: 16.12.2016
(51) Int. Cl.: G01L 3/10

(54) **DREHMOMENTSENSORVORRICHTUNG FÜR EIN KRAFTFAHRZEUG, ELEKTRISCHES LENKSYSTEM SOWIE KRAFTFAHRZEUG MIT EINER SOLCHEN DREHMOMENTSENSORVORRICHTUNG**
TORQUE SENSOR DEVICE FOR A MOTOR VEHICLE, ELECTRICAL POWER STEERING SYSTEM AND MOTOR VEHICLE USING THE TORQUE SENSOR DEVICE
DISPOSITIF DE DÉTECTION DE COUPLE, DIRECTION ASSISTÉE ÉLECTRIQUE ET VÉHICULE COMPRENANT UN TEL DISPOSITIF DE DÉTECTION DE COUPLE

(30) Priorität: 08.01.2016 DE 102016100236
(43) Veröffentlichungstag der Anmeldung: 14.11.2018
(73) Patentinhaber: Valeo Schalter und Sensoren GmbH, 74321 Bietigheim-Bissingen (DE)
(72) Erfinder: RACHUI, Dirk, 74321 Bietigheim-Bissingen (DE); FROEHLICH, Ekkehart, 74321 Bietigheim-Bissingen (DE); TURMEZEI, Peter, 8200 Veszprem (HU); THOM, Jens, 74321 Bietigheim-Bissingen (DE); SCHOEPE, Roman, 74321 Bietigheim-Bissingen (DE)
(74) Vertreter: Pothmann, Karsten
(86) Internationale Anmeldenummer: PCT/EP2016/081378
(87) Internationale Veröffentlichungsnummer: WO 2017/118556

(56) Entgegenhaltungen:
- CN-U- 204 461 657
- DE-A1-102011 121 093
- DE-A1-102012 014 208
- US-A1- 2014 123 770

## Beschreibung

Die Erfindung betrifft eine Drehmomentsensorvorrichtung für ein Kraftfahrzeug zum Erfassen eines Drehmoments an einer Welle des Kraftfahrzeugs, mit einem Stator zum Anordnen an einer ersten Teilwelle der Welle, wobei der Stator zwei ringförmige Statorelemente mit jeweiligen radial zu einer Längsachse der Drehmomentsensorvorrichtung nach außen geführten, einander unter Ausbildung eines Zwischenraums axial gegenüberliegenden Randbereichen aufweist, mit einem ringförmigen, von dem Stator umgebenen Magneten zum Anordnen an einer zweiten Teilwelle der Welle und mit einer in dem Zwischenraum angeordneten Magnetfeldsensoreinrichtung, welche zumindest einen Magnetfeldsensor zum Erfassen eines magnetischen Flusses und zumindest zwei Flussleitelemente zum Führen des magnetischen Flusses von dem jeweiligen Statorelement zu dem Magnetfeldsensor aufweist. Die Erfindung betrifft außerdem ein elektrisches Lenksystem mit einer Drehmomentsensorvorrichtung sowie ein Kraftfahrzeug mit einem elektrischen Lenksystem.

Drehmomentsensorvorrichtungen sind bereits aus dem Stand der Technik bekannt und dienen dazu, ein auf eine Welle des Kraftfahrzeugs aufgebrachtes Drehmoment zu erfassen. Solche Drehmomentsensorvorrichtungen können beispielsweise bei einem elektrischen Lenksystem des Kraftfahrzeugs eingesetzt werden und das Drehmoment auf eine Lenkwelle des Kraftfahrzeugs messen. Das erfasste Drehmoment kann als Lenkbefehl einem Steuergerät des Lenksystems bereitgestellt werden.

Zum Erfassen des Drehmoments kann die Drehmomentsensorvorrichtung einen Ringmagneten und einen den Ringmagneten umgebenden, ringförmigen Stator aufweisen, wobei der Stator an einer ersten Teilwelle der Welle angeordnet ist und der Ringmagnet an einer zweiten Teilwelle der Welle angeordnet ist. Die Teilwellen liegen sich dabei in axialer Richtung gegenüber und sind über einen Torsionsstab beziehungsweise eine Drehstabfeder miteinander verbunden. Durch Aufbringen eines Drehmoments auf die Lenkwelle drehen sich der Stator und der Ringmagnet relativ zueinander um eine entlang der Lenkwelle orientierte Längsachse der Drehmomentsensorvorrichtung. Über den Stator, welcher üblicherweise aus zwei separaten, in axialer Richtung einander gegenüberliegenden Statorelementen besteht, wird der magnetische Fluss, welcher sich durch die relative Verdrehung des Ringmagneten zum Stator und damit in Abhängigkeit von dem Drehmoment verändert, hin zu zwei Flussleitelementen geleitet. Die Flussleitelemente geben den magnetischen Fluss an einen Magnetfeldsensor, beispielsweise einen Hall-Sensor, ab, welcher den magnetischen Fluss misst. Der Magnetfeldsensor befindet sich dabei zwischen den beiden Flussleitelementen. Gemäß der DE 10 2012 024 382 A1 sind die Flussleiter einer Drehmomentsensorvorrichtung plattenförmig ausgebildet, sodass diese in radialer Richtung über einen Randbereich der Statorelemente hinausragen und daher einen besonders hohen Platzbedarf aufweisen. Dadurch ist eine kompakte Bauweise der Drehmomentsensorvorrichtung nicht möglich. In der DE 10 2008 015 274 A1 ist beschrieben, dass eine Sensorbaugruppe bestehend aus einem Magnetfeldsensor und Flussleitelementen in einem Zwischenraum zwischen zwei radial außen liegenden, axial beabstandeten Randbereichen der Statorelemente angeordnet ist, wobei sich die Flussleiter weitgehend parallel zu den Statorelementen erstrecken. In der CN 20446157U werden Flussleiter verwendet welche zylinderförmige und kegelstumpfförmige Bereiche haben. Die DE 10 2012 014208 zeigt die Befestigung von Flussleitern mit Hilfe von Stiften an einem Befestigungsbereich.

Es ist Aufgabe der vorliegenden Erfindung, besonders einfach zu fertigende Flussleitelemente für eine Drehmomentsensorvorrichtung bereitzustellen, welche besonders platzsparend an der Drehmomentsensorvorrichtung angeordnet werden können und somit eine besonders kompakte Bauweise der Drehmomentsensorvorrichtung ermöglichen.

Diese Aufgabe wird erfindungsgemäß durch eine Drehmomentsensorvorrichtung, ein elektrisches Lenksystem sowie ein Kraftfahrzeug gemäß den unabhängigen Patentansprüchen gelöst. Vorteilhafte Ausführungsformen der Erfindung sind Gegenstand der abhängigen Patentansprüche, der Beschreibung und der Figuren.

Eine erfindungsgemäße Drehmomentsensorvorrichtung für ein Kraftfahrzeug dient zum Erfassen eines Drehmoments an einer Welle des Kraftfahrzeugs. Die Drehmomentsensorvorrichtung umfasst einen Stator zum Anordnen an einer ersten Teilwelle der Welle, wobei der Stator zwei ringförmige Statorelemente mit jeweiligen radial zu einer Längsachse der Drehmomentsensorvorrichtung nach außen geführten, einander unter Ausbildung eines Zwischenraums axial gegenüberliegenden Randbereichen aufweist, sowie einen ringförmigen, von dem Stator umgebenen Magneten zum Anordnen an einer zweiten Teilwelle der Welle. Außerdem umfasst die Drehmomentsensorvorrichtung eine in dem Zwischenraum angeordnete Magnetfeldsensoreinrichtung, welche zumindest einen Magnetfeldsensor zum Erfassen eines magnetischen Flusses und zumindest zwei Flussleitelemente zum Führen des magnetischen Flusses von dem jeweiligen Statorelement zu dem Magnetfeldsensor aufweist. Dabei sind die Flussleitelemente in dem Zwischenraum in axialer Richtung orientiert und entlang der axialen Richtung stabförmig ausgebildet.

Die Drehmomentsensorvorrichtung dient zum Erfassen des Drehmoments an der Welle des Kraftfahrzeugs, welche beispielsweise als eine Lenkwelle eines elektrischen Lenksystems des Kraftfahrzeugs ausgebildet sein kann. Die Lenkwelle weist zwei axial gegenüberliegende Teilwellen auf, welche über eine Drehstabfeder beziehungsweise einen Torsionsstab miteinander verbunden sind, wobei der Stator mit der ersten Teilwelle verbunden ist und der ringförmige Magnet beziehungsweise der Ringmagnet mit der zweiten Teilwelle verbunden ist. Der Stator kann sich also mit der ersten Teilwelle drehen und der Ringmagnet kann sich mit der zweiten Teilwelle drehen.

Der Stator beziehungsweise das Statorpaket ist beispielsweise aus einem weichmagnetischen Material ausgebildet und ist dazu ausgelegt, den magnetischen Fluss von dem Magneten hin zu den Flussleitern zu leiten. De Stator umfasst die zwei axial einander gegenüberliegenden Statorelemente beziehungsweise Statorteile, welche insbesondere identisch beziehungsweise gleich ausgebildet sind. Jedes Statorelement kann dabei eine Vielzahl von Zahnelementen, beispielsweise jeweils acht Zahnelemente, aufweisen, welche in einer um die Längsachse verlaufende Umlaufrichtung beabstandet zueinander angeordnete sind und sich in axialer Richtung erstrecken. Die Zahnelemente sind also ringförmig um die Längsachse beziehungsweise Rotationsachse der Drehmomentsensorvorrichtung angeordnet und verlaufen insbesondere parallel zu der Längsachse. Dabei erstrecken sich die Zahnelemente eines Statorelementes in Richtung des jeweils anderen, gegenüberliegenden Statorelementes. Dabei sind die Zahlelement der beiden axial gegenüberliegenden Statorelemente ineinander verzahnt angeordnet. Dies bedeutet, dass jeweils ein Zahnelement eines ersten der Statorelemente zwischen zwei Zahlelementen eines zweiten der Statorelemente angeordnet ist. Angrenzend an die Zahnelemente das Statorelementes ist der Randbereich radial nach außen geführt, sodass sich die Randbereiche der beiden Statorelemente unter Ausbildung des Zwischenraumes beziehungsweise Luftspalts axial gegenüberliegen. Die Randbereiche sind also flanschartig an den Zahnelementen angeordnet. Eine Größe beziehungsweise ein Volumen des Zwischenraumes ist dabei abhängig von einem Abstand zwischen den Randbereichen sowie einer radialen Breite der Randbereiche.

Der ringförmige Magnet beziehungsweise Ringmagnet der Drehmomentsensorvorrichtung liegt von der Längsachse aus gesehen innerhalb des Stators, wird also von dem Stator umgeben. Dabei liegt der Ringmagnet axial zwischen den beiden Statorelementen, wobei die ineinander verzahnten Zahnelemente der Statorelemente den ringförmigen Magneten umgeben. Der Ringmagnet liegt somit dem Stator in radialer Richtung, insbesondere unter Ausbildung eines Luftspalts, gegenüber. Der Ringmagnet weist insbesondere eine Vielzahl von in der Umlaufrichtung abwechselnd magnetisierten Polen auf, wobei eine Anzahl der Pole einer Gesamtanzahl an Zahnelementen des Stators entspricht. Beispielsweise weist der Ringmagnet sechzehn alternierend magnetisierte Pole auf, wenn die Statorelemente beispielsweise jeweils acht Pole aufweisen. Der Ringmagnet und der Stator sind relativ zueinander um die Längsachse der Drehmomentsensorvorrichtung drehbar.

In dem Zwischenraum ist die Magnetfeldsensoreinrichtung angeordnet. Die Magnetfeldsensoreinrichtung umfasst den zumindest einen Magnetfeldsensor, beispielsweise einen Hall-Sensor, welcher die aus der relativen Verdrehung zwischen dem Stator und dem Ringmagneten resultierende Änderung des magnetischen Flusses misst. Um den magnetischen Fluss an den Statorelementen zu sammeln und konzentriert an den zumindest einen Magnetfeldsensor weiterzuleiten, weist die Magnetfeldsensoreinrichtung die zumindest zwei Flussleitelemente auf, welche vollständig innerhalb des Zwischenraumes angeordnet sind. Die drahtförmigen Flussleitelemente sind also in radialer Richtung unterhalb eines in Umlaufrichtung verlaufenden Außenumfangs der Randbereiche der Statorelemente positioniert. Anders ausgedrückt, ist ein Abstand zwischen der Längsachse und den Flussleitelementen kleiner als ein Außendurchmesser des Stators.

Die Flussleitelemente sind dabei in dem Zwischenraum beabstandet zu einer dem Zwischenraum zugewandten Innenseite der Randbereiche angeordnet und mit dem zumindest einen Magnetfeldsensor verbunden. Insbesondere ist eine jeweilige Grundfläche der stabförmigen Flussleitelemente innerhalb des Zwischenraumes beabstandet zu der Innenseite des jeweiligen Randbereiches der Statorelemente angeordnet und vollständig überlappend mit der Innenseite ausgebildet. Eine Deckfläche der stabförmigen Flussleitelemente ist an dem Magnetfeldsensor angeordnet. Der Magnetfeldsensor ist also in axialer Richtung zwischen den beiden Flussleitelementen angeordnet. Die Flussleitelemente berühren dabei die Statorelemente nicht, sodass der zumindest eine Magnetfeldsensor vor einer mechanischen Berührung durch die Statorelemente geschützt ist. Durch die beabstandete Anordnung sind also der zumindest eine Magnetfeldsensor sowie die Flussleitelemente, also die Magnetfeldsensoreinrichtung, insbesondere ortsfest bezüglich dem Stator angeordnet. Die stabförmigen beziehungsweise drahtförmigen Flussleitelemente erstrecken sich dabei in axialer Richtung im Wesentlichen parallel zu der Längsachse der Drehmomentsensorvorrichtung, sodass die Grundfläche und die Deckfläche der stabförmigen Flussleitelemente insbesondere fluchtend zueinander angeordnet sind. Dabei sind die Flussleitelemente entlang der axialen Richtung insbesondere verbiegungsfrei ausgebildet und erstrecken sich gerade von dem jeweiligen Statorelement zu dem Magnetfeldsensor. Insbesondere ist eine Ausdehnung eines Flussleitelementes in axialer Richtung größer als in radialer Richtung. Anders ausgedrückt, ist eine Länge des Flussleitelementes größer als ein Durchmesser des Flussleitelementes. Die Flussleitelemente weisen also in radialer Richtung besonders geringe Ausdehnungen auf und können besonders platzsparend in dem Zwischenraum angeordnet werden, sodass die Magnetfeldsensoreinrichtung besonders kompakt ausgestaltet ist.

Die Drehmomentsensorvorrichtung kann beispielsweise zusätzlich eine Drehwinkelsensoreinrichtung aufweisen, mittels welcher zusätzlich ein Drehwinkel der Welle erfasst werden kann. Die Drehwinkelsensoreinrichtung kann einen Rotor, welcher eine umlaufend ausgebildete Zahnstruktur aufweist, und zumindest ein Zahnrad mit einem Magneten aufweisen. Das Zahnrad kann in Eingriff mit der Zahnstruktur des Rotors gebracht werden, sodass eine Drehbewegung des Rotors und damit der Welle in eine Drehbewegung des Magneten übertragen wird. Die Drehwinkelsensoreinrichtung kann auch einen Magnetfelddetektor aufweisen, der zur Erfassung einer Richtung des Magnetfeldes des Magneten und somit zur Erfassung der Drehbewegung ausgebildet ist. Somit ist die Drehmomentsensorvorrichtung besonderes vielseitig ausgebildet.

Gemäß einer Ausführungsform der Erfindung sind die stabförmigen Flussleitelemente zylinderförmig ausgebildet. Mit anderen Worten bedeutet dies, dass die Flussleitelemente eine, insbesondere gerade, Zylinderform aufweisen, wobei die Grundfläche und die Deckfläche kreisförmig und kongruent ausgebildet sind sowie fluchtend zueinander angeordnet sind. Ein solches zylinderförmiges Flussleitelement kann beispielsweise auf besonders einfache Weise durch Ablängen eines Drahtes hergestellt werden.

Gemäß einer anderen Ausführungsform sind die stabförmigen Flussleitelemente quaderförmig ausgebildet. Die Grundfläche und die Deckfläche sind also rechteckig oder quadratisch sowie kongruent ausgebildet. Die Flussleitelemente sind insbesondere gerade quaderförmig ausgebildet, sodass die Grundfläche und die Deckfläche fluchtend zueinander angeordnet sind. Solche quaderförmigen Flussleitelemente weisen eine besonders hohe Stabilität auf.

In einer weiteren Ausführungsform der Erfindung sind die stabförmigen Flussleitelemente kegelstumpfförmig ausgebildet. Bei der kegelstumpfförmigen Form weist die Grundfläche einen im Vergleich zur Deckfläche größeren Flächeninhalt auf. Dabei ist die Grundfläche mit dem größeren Flächeninhalt beabstandet zu der Innenseite des Randbereiches und vollständig überlappend mit der Innenseite des Randbereiches angeordnet. Die Deckfläche ist mit dem Magnetfeldsensor verbunden. Das Flussleitelement verjüngt sich also in Richtung des Magnetfeldsensors. Dadurch wird in vorteilhafter Weise ein Überlappungsbereich zwischen der Innenseite des Randbereiches und dem Flussleitelement für die Magnetflussaufnahme am Stator vergrößert.

In einer alternativen Ausgestaltung der Erfindung sind die stabförmigen Flussleitelemente pyramidenstumpfförmig ausgebildet. Auch hier weist die Grundfläche der pyramidenstumpfförmigen Flussleitelemente einen im Vergleich zur Deckfläche größeren Flächeninhalt auf, sodass wiederum ein besonders großer Überdeckungsbereich zwischen dem Flussleitelement und dem Stator ausgebildet wird. Pyramidenstumpfförmige Flussleitelemente weisen ebenfalls eine besonders hohe Stabilität auf.

Bevorzugt weist die Magnetfeldsensoreinrichtung zumindest zwei plattenförmige Flächenvergrößerungselemente mit jeweils einer im Vergleich zu einer den Randbereichen zugewandten Grundfläche der Flussleitelemente größeren Fläche auf, wobei jedes Flussleitelement mit einem der Flächenvergrößerungselemente verbunden ist und wobei jeweils ein Flächenvergrößerungselement beabstandet und vollständig überlappend mit einer dem zugewandten Innenseite des jeweiligen Randbereiches des Statorelementes ausgebildet ist. Die Grundfläche des Flussleitelementes ist dabei auf einer der Innenseite des Randbereiches des Statorelementes abgewandten Seite des plattenförmigen Flächenvergrößerungselements angeordnet, wobei die einander gegenüberliegenden Seiten des plattenförmigen Flächenvergrößerungselementes sowie die Grundfläche und die Deckfläche des Flussleitelementes entlang der axialen Richtung fluchtend zueinander angeordnet sind. Der magnetische Fluss wird also von dem Statorelement über das Flächenvergrößerungselement zu dem Flussleitelement geleitet und von dem Flussleitelement an den zumindest einen Magnetfeldsensor abgegeben. Dabei sind das Flussleitelement und das plattenförmige Flächenvergrößerungselement insbesondere aus dem gleichen Material, insbesondere einem magnetisch gut leitfähigen Material, ausgebildet. Das Flussleitelement und das Flächenvergrößerungselement können einteilig ausgebildet sein und einen abgesetzten Flussleiter ausbilden. Es kann aber auch vorgesehen sein, dass das Flussleitelement und das Flächenvergrößerungselement zweiteilig ausgebildet sind und beispielsweise miteinander verbunden sind. Durch das plattenförmige Flächenvergrößerungselement kann wiederum ein besonders großflächiger Überdeckungsbereich mit der Innenseite des Randbereiches bereitgestellt werden

Vorzugsweise entspricht eine Form der Fläche der plattenförmigen Flächenvergrößerungselemente einer Form der Grundfläche der Flussleitelemente. Mit anderen Worten bedeutet dies, dass bei einem zylinderförmigen Flussleitelement die Fläche des plattenförmigen Flächenvergrößerungselementes kreisförmig ausgebildet ist, wobei der Flächeninhalt des plattenförmigen Flächenvergrößerungselementes größer ist als der Flächeninhalt der Grundfläche des Flussleitelementes.

Auch kann vorgesehen sein, dass die plattenförmigen Flächenvergrößerungselemente ringsegmentförmig ausgebildet sind. Außenkanten der Flächenvergrößerungselemente verlaufen also entlang der Umlaufrichtung und somit parallel zu einem Außenumfang des Randbereiches. Somit kann verhindert werden, dass die plattenförmigen Flächenvergrößerungselemente über die Randbereiche der Statorelemente hinaus ragen.

Es erweist sich als vorteilhaft, wenn die Magnetfeldsensoreinrichtung zumindest zwei Magnetfeldsensoren aufweist, und auf jedem der plattenförmigen Flächenvergrößerungselemente zumindest zwei Flussleitelemente angeordnet sind, wobei jedes der Flussleitelemente eines Flächenvergrößerungselementes dazu ausgelegt ist, den magnetischen Fluss von dem jeweiligen Statorelement zu einem der Magnetfeldsensoren zu führen. Mit anderen Worten bedeutet dies, dass jeder Magnetfeldsensor zwischen zwei Flussleitelementen angeordnet ist. Dabei sind an dem ersten Statorelement eine zu der Anzahl an Magnetfeldsensoren korrespondierende Anzahl an Flussleitelementen angeordnet und an dem zweiten Statorelement eine zu der Anzahl an Magnetfeldsensoren korrespondierende Anzahl an Flussleitelementen angeordnet. Dabei sind die dem ersten Statorelement zugeordneten Flussleitelemente auf einem ersten Flächenvergrößerungselement angeordnet und die dem zweiten Statorelement zugeordneten Flussleitelemente auf einem zweiten Flächenvergrößerungselement angeordnet. Anders ausgedrückt, sind auf einem Flächenvergrößerungselement mehrere Flussleitelemente beabstandet zueinander angeordnet, wobei jedes Flussleitelement den magnetischen Fluss von dem Flächenvergrößerungselement zu dem jeweiligen zugeordneten Magnetfeldsensor leitet. Dabei ist das Flächenvergrößerungselement insbesondere ringsegmentförmig ausgebildet, wobei die Flussleitelement in Umlaufrichtung beabstandet zueinander auf dem Flächenvergrößerungselement angeordnet sind. Das Flächenvergrößerungselement mit den darauf angeordneten Flussleitelementen kann einteilig oder mehrteilig ausgebildet werden. Somit kann eine Magnetfeldsensoreinrichtung mit mehreren Magnetfeldsensoren besonders einfach ausgebildet werden.

Erfindungsgemäß weist jedes Flussleitelement zumindest ein Befestigungselement zum Halten des Flussleitelements in einem Gehäuseelement der Magnetfeldsensoreinrichtung auf. Dabei können der zumindest eine Magnetfeldsensor und die Flussleitelemente in dem Gehäuseelement beziehungsweise Sensorgehäuse angeordnet sein, wobei beispielsweise die Grundfläche des Flussleitelementes bündig abschließend mit einer Außenseite des Gehäuseelementes ausgebildet ist. Das Befestigungselement ist einteilig mit dem jeweiligen Flussleitelement ausgebildet und dient dazu, das drahtförmige Flussleitelement in dem Gehäuseelement zu positionieren und zu befestigen. Die Befestigung kann beispielsweise durch Umspritzen des Flussleitelementes in einem Innenraum des Gehäuseelementes, beispielsweise mit einer Kunststoffmasse, erfolgen. Das Befestigungselement ist insbesondere als eine Struktur beziehungsweise Geometrie, beispielsweise in einer Außenseite des Flussleitelementes, ausgebildet, welche einen Formschluss mit dem Sensorgehäuse herstellt. Auch kann das Flussleitelement beispielsweise in das Gehäuseelement eingepresst werden, wodurch ein Formschluss und/oder ein Kraftschluss mit dem Gehäuse hergestellt wird. Das Befestigungselement wirkt also als eine Hinterschneidung in dem umgebenden Gehäuseelement und hält das Flussleitelement in dem Gehäuseelement in seiner Position. Die Geometrie beziehungsweise das Befestigungselement kann beispielsweise durch Prägen, Sicken, Stanzen oder ein anderes Fertigungsverfahren hergestellt werden.

In einer Ausführungsform der Erfindung ist das Befestigungselement als eine das Flussleitelement in radialer Richtung umlaufende Rille in einer Außenfläche des Flussleitelements ausgebildet. Im Bereich der Rille weist das Flussleitelement also einen geringeren Durchmesser auf als in den anderen Bereichen. Die Rille kann beispielsweise mittig zwischen der Grundfläche und der Deckfläche in der Außenseite des Flussleitelementes ausgebildet sein und eine Struktur ausbilden, durch welche auf besonders einfache Weise eine sichere Positionierung des Flussleitelementes in dem Gehäuseelement erreicht werden kann.

In einer weiteren Ausführungsform kann das Befestigungselement als Vertiefungen in Form von nach innen gewölbten Flächen in der Außenseite des Flussleitelementes ausgebildet sein, welche sich axial zwischen der Grundfläche und der Deckfläche des Flussleitelementes erstrecken. Dazu können die Grundfläche und die Deckfläche sternförmig ausgebildet sein.

Auch kann vorgesehen sein, dass das Befestigungselement als eine Erhebung an einer Außenseite des Flussleitelementes ausgebildet ist. Die Erhebung kann beispielsweise eine Einprägung sein, welche reliefartig an der Außenseite des Flussleitelementes absteht. Die Erhebung kann beispielsweise eine plattenartige, halbkreisförmige Struktur ausgebildet sein, welche sich senkrecht zu der Außenseite des Flussleitelementes erstreckt. Somit kann beispielsweise beim Umspritzen des Flussleitelementes verhindert werden, dass sich das Flussleitelement in dem Sensorgehäuse bewegt.

Es erweist sich als vorteilhaft, wenn die Drehmomentsensorvorrichtung eine ringförmige Gehäuseeinrichtung mit einem ringförmigen Gehäuseelement und einem das ringförmige Gehäuseelement umgebenden ringförmigen Halteelement aufweist, wobei die Magnetfeldsensoreinrichtung in dem Gehäuseelement angeordnet ist und die Statorelemente an dem ringförmigen Halteelement angeordnet sind. Durch das Gehäuseelement werden der Magnetfeldsensor und die Flussleitelemente ortsfest gehalten. Das Gehäuseelement kann beispielsweise an einem Innendruchmesser einen kragenförmigen Bereich aufweisen, welcher zum Aufnehmen und/oder Haltes des Ringmagneten ausgebildet ist. An dem Halteelement sind die Statorelement angeordnet und dort gehalten.

Die Erfindung betrifft außerdem ein elektrisches Lenksystem für ein Kraftfahrzeug mit einer Lenkwelle aufweisend eine erste Teilwelle und eine zweite Teilwelle, wobei die Teilwellen über einen Torsionsstab miteinander verbunden sind, und mit einer erfindungsgemäßen Drehmomentsensorvorrichtung, wobei der Stator der Drehmomentsensorvorrichtung an der ersten Teilwelle angeordnet ist und der Magnet der Drehmomentsensorvorrichtung an der zweiten Teilwelle angeordnet ist.

Ein erfindungsgemäßes Kraftfahrzeug umfasst ein erfindungsgemäßes elektrisches Lenksystem. Das Kraftfahrzeug ist insbesondere als ein Personenkraftwagen ausgebildet.

Die mit Bezug auf die erfindungsgemäße Drehmomentsensorvorrichtung vorgestellten bevorzugten Ausführungsformen und deren Vorteile gelten entsprechend für das erfindungsgemäße elektrische Lenksystem sowie für das erfindungsgemäße Kraftfahrzeug.

Mit Angaben "radial" (Fᵣ), "axial" (Fₐ), "Längsachse", "außen", "innen", "zwischen", etc. sind bei bestimmungsgemäßem Gebrauch und bestimmungsgemäßem Anordnen der Drehmomentsensorvorrichtung an einer Welle des Kraftfahrzeugs und bei einem dann in Richtung der Welle blickenden Beobachter gegebene Position und Orientierungen angegeben.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: eine schematische Darstellung einer Ausführungsform einer erfindungsgemäßen Drehmomentsensorvorrichtung;
- Fig. 2: eine Explosivdarstellung der erfindungsgemäßen Drehmomentsensorvorrichtung gemäß Fig. 1;
- Fig. 3a-e: schematische Darstellungen von Ausführungsformen von Flussleitelementen;
- Fig. 4a-c: schematische Darstellungen von Flussleitelementen mit Ausführungsformen von Flächenvergrößerungselementen;
- Fig. 5: eine schematische Darstellung einer Gehäuseeinrichtung mit Flussleitelementen für eine erfindungsgemäße Drehmomentsensorvorrichtung;
- Fig. 6: eine schematische Darstellung eines Querschnitts durch die erfindungsgemäße Gehäuseeinrichtung; und
- Fig. 7: eine schematische Darstellung einer Ausführungsform eines erfindungsgemäßen Kraftfahrzeugs.

In den Figuren sind gleiche sowie funktionsgleiche Elemente mit den gleichen Bezugszeichen versehen.

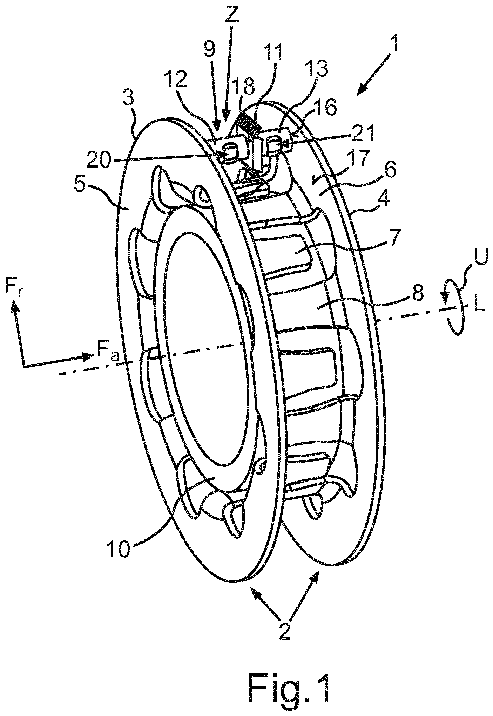

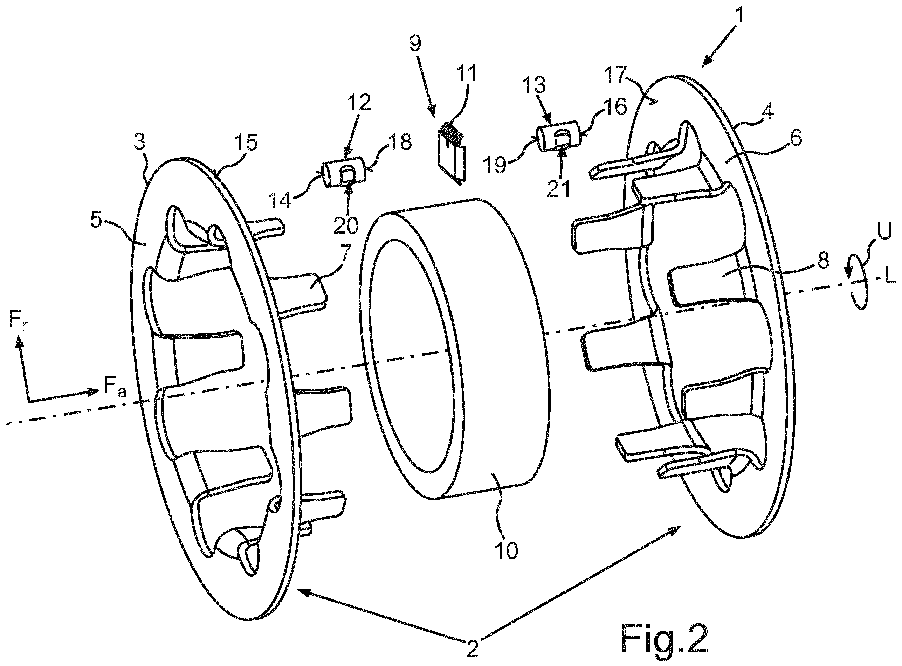

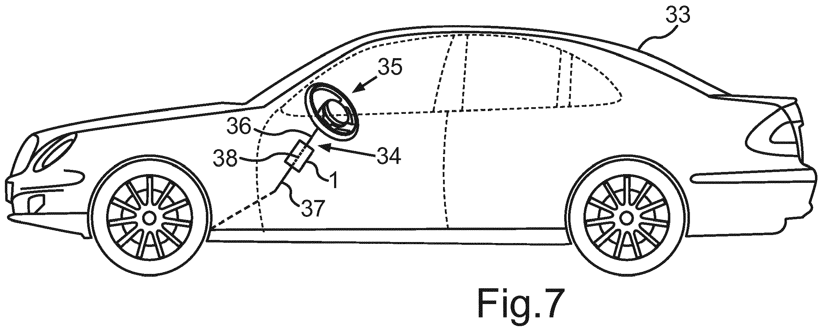

Fig. 1 zeigt eine Drehmomentsensorvorrichtung 1, welche zum Erfassen eines Drehmoments auf eine Welle 34 eines in Fig. 7 gezeigten Kraftfahrzeugs 33 ausgebildet ist. Die Welle 34 ist insbesondere eine Lenkwelle eines elektrischen Lenksystems 35 des Kraftfahrzeugs 33. Die Drehmomentsensorvorrichtung 1 gemäß Fig.1 ist in Fig. 2 in einer Explosivdarstellung gezeigt. Die Drehmomentsensorvorrichtung 1 weist einen Stator 2 auf, welcher an einer ersten Teilwelle 36 der Welle 34 angeordnet werden kann. Der Stator 2 ist zweiteilig ausgebildet und weist zwei in axialer Richtung Fₐ einander gegenüberliegende, insbesondere gleich ausgebildete, Statorelemente 3, 4 auf. Die Statorelemente 3,4 verlaufen ringförmig um eine entlang der Welle 34 orientierte Längsachse L der Drehmomentsensorvorrichtung 1. Jedes Statorelement 3, 4 ist einstückig ausgebildet und weist einen ringförmigen, sich in radialer Richtung Fᵣ nach außen erstreckenden Randbereich 5, 6 auf. Außerdem weist jedes Statorelement 3, 4 eine Vielzahl von Zahnelementen 7, 8 auf, welche in Umlaufrichtung U beabstandet zueinander angeordnet sind und welche von einem in radialer Richtung Fᵣ innen liegenden Innenumfang des jeweiligen Randbereiches 5, 6 ausgehend in axialer Richtung Fₐ abstehen. Die Zahnelemente 7, 8 erstrecken sich somit in axialer Richtung Fₐ parallel zu der Längsachse L beziehungsweise Rotationsachse der Drehmomentsensorvorrichtung 1. Insbesondere entspricht eine Anzahl an Zahnelementen 7 des ersten Statorelementes 3 einer Anzahl an Zahnelementen 8 des zweiten Statorelementes 4. Jedes Statorelement 3, 4 kann beispielsweise jeweils acht Zahnelemente 7, 8 aufweisen. Die Statorelemente 3, 4 sind dabei in axialer Richtung Fₐ derart gegenüberliegend und ineinander verzahnt angeordnet, dass jeweils ein Zahnelement 7 des ersten Statorelementes 3 zwischen zwei Zahnelementen 8 des zweiten Statorelementes 4 angeordnet ist. Die beiden gegenüberliegenden, flanschartigen Randbereiche 5, 6 der Statorelemente 3, 4 bilden einen Zwischenraum Z beziehungsweise einen Luftspalt aus, in welchem eine Magnetfeldsensoreinrichtung 9 der Drehmomentsensorvorrichtung 1 angeordnet ist.

Außerdem weist die Drehmomentsensorvorrichtung 1 einen Ringmagneten 10 auf, welcher ebenfalls ringförmig um die Längsachse L orientiert angeordnet ist und in radialer Richtung Fᵣ innerhalb des Stators 2 angeordnet ist. Der Ringmagnet 10 ist mit einer zweiten Teilwelle 37 der Welle 34 verbunden, wobei die Teilwellen 36, 37 über einen Torsionsstab 38 miteinander verbunden sind und somit relativ zueinander drehbar sind. Der Ringmagnet 10 weist insbesondere in Umlaufrichtung U mehrere abwechselnd magnetisierte Pole auf. Der Ringmagnet 10 und der Stator 2 sind relativ zueinander um die Längsachse L drehbar. Die Magnetfeldsensoreinrichtung 9 weist zumindest einen Magnetfeldsensor 11 auf, welcher in dem Zwischenraum Z zwischen den Randbereichen 5, 6 angeordnet ist und welcher eine durch die relative Drehbewegung zwischen dem Ringmagneten 10 und dem Stator 2 resultierende Veränderung des magnetischen Flusses messen kann. Anhand der von dem Magnetfeldsensor 11 erfassten magnetischen Flussgröße kann das Drehmoment auf die Welle 34 bestimmt werden. Der Magnetfeldsensor 11 kann beispielsweise als ein Hall-Sensor ausgebildet sein. Die Magnetfeldsensoreinrichtung 9 umfasst außerdem zumindest zwei Flussleitelemente 12, 13, welche den magnetischen Fluss von den Statorelementen 3, 4 aufnehmen und dem Magnetfeldsensor 11 zuführen. Die Flussleitelemente 12, 13 sind ebenfalls in dem Zwischenraum Z angeordnet und in axialer Richtung Fₐ stabförmig ausgebildet. Die Flussleitelemente 12, 13 sind axial einander gegenüberliegend angeordnet, wobei der Magnetfeldsensor 11 zwischen den Flussleitelementen 12, 13 angeordnet ist.

Eine erste Grundfläche 14 des ersten Flussleitelementes 12 ist beabstandet zu einer ersten Innenseite 15 des ersten Randbereiches 5 des ersten Statorelementes 3 angeordnet. Eine zweite Grundfläche 16 des zweiten Flussleitelementes 13 ist beabstandet zu einer zweiten Innenseite 17 des zweiten Randbereiches 6 des zweiten Statorelementes 4 angeordnet. Die Innenseiten 15, 17 der Randbereiche 5, 6 sind dem Zwischenraum Z zugewandt. Eine erste Deckfläche 18 des ersten Flussleitelementes 12 ist mit dem Magnetfeldsensor 11 verbunden und eine zweite Deckfläche 19 des zweiten Flussleitelementes 13 ist ebenfalls mit dem Magnetfeldsensor 11 verbunden. Die Grundflächen 14, 16 der beiden Flussleitelemente 12, 13 überlappen dabei vollständig mit den Innenseiten 15, 17 der Randbereiche 5, 6. Außerdem ist die erste Grundfläche 14 in axialer Richtung Fₐ fluchtend zu der ersten Deckfläche 18 angeordnet und die zweite Grundfläche 16 in axialer Richtung Fₐ fluchtend zu der zweiten Deckfläche 19 angeordnet. Die Flussleitelemente 12, 13 sind in axialer Richtung Fₐ insbesondere verbiegungsfrei ausgebildet.

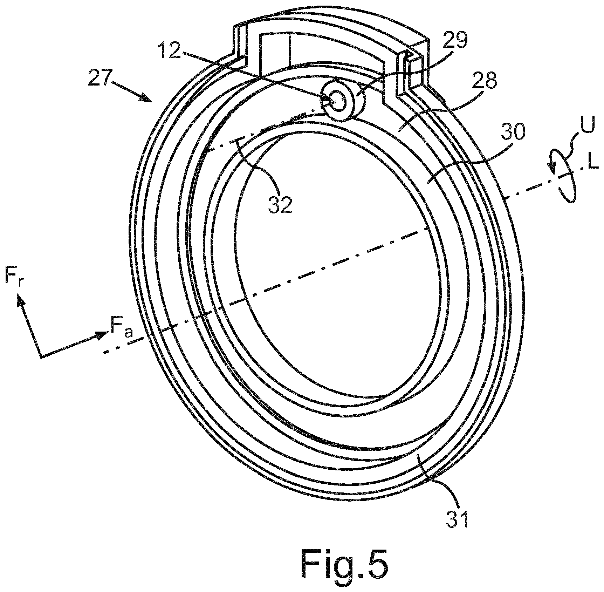

Außerdem weisen die Flussleitelemente 12, 13 hier jeweilige Befestigungselemente 20, 21 auf. Mittels der Befestigungselemente 20, 21 können die Flussleitelemente 12, 13 in einem in Fig. 5 beispielhaft gezeigten Gehäuseelement 28 der Magnetfeldsensoreinrichtung 9 angeordnet werden und dort sicher positioniert werden.

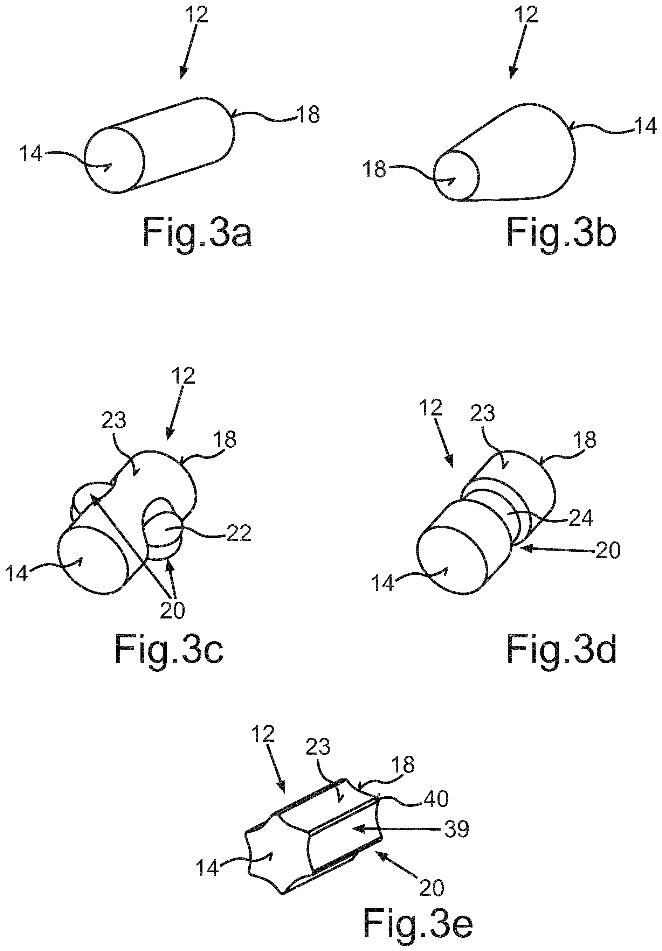

Fig. 3a bis 3e zeigen verschiedene Ausführungsformen der Flussleitelemente 12, 13, wobei beispielhaft nur das erste Flussleitelement 12 dargestellt ist. Das zweite Flussleitelement 13 kann entsprechend identisch ausgebildet sein. Fig. 3a zeigt eine Ausführungsform, bei welcher das Flussleitelement 12 zylinderförmig ausgebildet ist. Somit sind die Grundfläche 14 und die Deckfläche 18 kreisförmig und kongruent beziehungsweise deckungsgleich ausgebildet. Die Grundfläche 14 und die Deckfläche 18 sind fluchtend zueinander ausgebildet, sodass das Flussleitelement 12 gemäß Fig. 3a gerade zylinderförmig ausgebildet ist.

Fig. 3b zeigt eine Ausführungsform des Flussleitelementes 12, bei welchem das Flussleitelement 12 kegelstumpfförmig ausgebildet ist. Die Grundfläche 14 und die Deckfläche 18 sind wiederum kreisförmig ausgebildet, wobei die Grundfläche 14 einen größeren Flächeninhalt aufweist als die Deckfläche 18. Durch die vergrößerte Grundfläche 14 wird ein Überdeckungsbereich beziehungsweise Überlappungsbereich mit der Innenseite 15 des Randbereiches 5 des Statorelementes 3 für die Magnetflussaufnahme vergrößert.

In Fig. 3c ist eine Ausführungsform für das Befestigungselement 20 des Flussleitelementes 12 dargestellt, welches hier zylinderförmig ausgebildet ist. Das Befestigungselement 20 ist als eine Erhebung 22 ausgebildet. Die Erhebung 22 ist als eine plattenförmige, halbkreisförmige Struktur in einer Außenseite 23 des Flussleitelementes 12 ausgebildet ist und erstreckt sich flügelartig senkrecht zu der Außenseite 23 des Flussleitelementes 12.

Fig. 3d zeigt eine weitere Ausführungsform für das Befestigungselement 20 in Form von einer Rille 24 in der Außenseite 23 des Flussleitelementes 12, welche sich um einen Außenumfang des Flussleitelementes 12 erstreckt. Die Rille 24 ist beispielsweise mittig zwischen der Grundfläche 14 und der Deckfläche 18 angeordnet.

In Fig. 3e ist eine weitere Ausführungsform des stabförmigen Flussleitelementes 12 abgebildet. Bei dem hier gezeigten Flussleitelement 12 sind die Grundfläche 14 und die Deckfläche 18 sternförmig, beispielsweise sechszackig sternförmig, ausgebildet. Somit weist die Außenseite 23 des Flussleitelementes 12 als das Befestigungselement 20 eine Vielzahl von Vertiefungen 39 in Form von nach innen gewölbten Flächen auf, welche entlang des Außenumfangs der Außenseite 23 angeordnet sind und sich in axialer Richtung Fₐ zwischen der Grundfläche 14 und der Deckfläche 18 erstrecken. Hier weist das Flussleitelement 12 aufgrund der sechszackig sternförmigen Form der Grundfläche 14 und der Deckfläche 18 sechs Vertiefungen 39 auf. Dabei grenzen Ränder von benachbarten Vertiefungen 39 unter Ausbildung eines jeweiligen Firstes 40 aneinander, wobei sich die Firste 40 ausgehend von einer jeweiligen Zackenspitze der sternförmigen Grundfläche 14 in axialer Richtung Fₐ zu einer Zackenspitze der sternförmigen Deckfläche 14 erstrecken.

Das Befestigungselement 21 des zweiten Flussleitelementes 13 kann identisch ausgebildet sein. Das Befestigungselement 20 gemäß Fig. 3c, 3d und 3e kann beispielsweise durch Sicken, Stanzen oder Einprägen ausgebildet werden. Das Befestigungselement 20 ist insbesondere als eine Hinterschneidung ausgebildet, durch welche eine formschlüssige und/oder kraftschlüssige Verbindung zwischen dem Flussleitelement 12 und dem Gehäuseelement 28 hergestellt werden kann, beispielsweise wenn das Flussleitelement 12 zum Befestigen in dem Gehäuseelement 28 umspritzt und/oder in das Gehäuseelement 28 eingepresst wird.

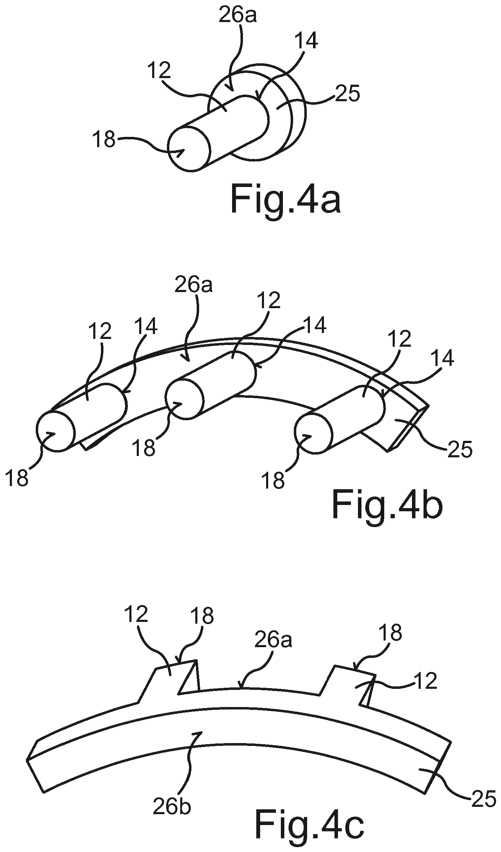

Fig. 4a bis 4c zeigen Ausführungsformen für Flussleitelemente 12, welche mit plattenförmigen Flächenvergrößerungselementen 25 verbunden sind. Die Flächenvergrößerungselemente 25 sind dabei beabstandet zu der Innenseite 15 des Randbereiches 5 des Statorelementes 3 und vollständig überlappend mit den Innenseite 15 ausgebildet ist. Durch das Flächenvergrößerungselement 25 wird der Überlappungsbereich mit der Innenseite 15 zur Magnetflussaufnahme vergrößert. Fig. 4a zeigt ein zylinderförmiges Flussleitelement 12, welches mit einem ebenfalls zylinderförmigen Flächenvergrößerungselement 25 verbunden ist. Eine dem Zwischenraum Z zugewandte Vorderseite 26a des Flächenvergrößerungselements 25 weist dabei einen größeren Flächeninhalt auf die Grundfläche 14 des Flussleitelementes 12. Dabei ist die Grundfläche 14 des Flussleitelementes 12 mit der Vorderseite 26a des Flächenvergrößerungselementes 25 verbunden. Das Flussleitelement 12 und das Flächenvergrößerungselement 25 können beispielsweise einteilig beziehungsweise einstückig ausgebildet sein. Es kann aber auch vorgesehen sein, dass das Flussleitelement 12 und das Flächenvergrößerungselement 25 als separate Teile ausgebildet sind und miteinander verbunden sind.

Fig. 4b zeigt eine weitere Ausführungsform, bei welcher mehrere Flussleitelemente 12 mit ihren Grundflächen 14 an einem ringsegmentförmigen Flächenvergrößerungselement 25 angeordnet sind. Gemäß dieser Ausführungsform weist die Magnetfeldsensoreinrichtung 9 der Drehmomentsensorvorrichtung 1 beispielsweise drei Magnetfeldsensoren 11 auf, wobei jeder der Magnetfeldsensoren 11 mit einem der Flussleitelemente 12 gekoppelt ist, sodass jedes der Flussleitelemente 12 den von dem Statorelement 3 über das Flächenvergrößerungselement 25 aufgenommenen magnetischen Fluss zu dem jeweiligen Magnetfeldsensor 11 leitet. An dem zweiten Statorelement 4 ist dabei ebenfalls ein Flächenvergrößerungselement 25 mit drei Flussleitelementen 13 angeordnet, welche den von dem Statorelement 4 über das Flächenvergrößerungselement 25 aufgenommenen magnetischen Fluss zu dem jeweiligen Magnetfeldsensor 11 leiten.

Fig. 4c zeigt eine weitere Ausführungsform eines ringsegmentförmigen Flächenvergrößerungselementes 25 mit quaderförmigen Flussleitelementen 12, wobei die Flussleitelemente 12 an der Vorderseite 26a an einer radial außen liegenden Außenkante des Flächenvergrößerungselementes 25 angeordnet sind. Die der Vorderseite 26a abgewandte Rückseite 26b ist beabstandet zu der Innenseite 15 des Randbereiches 5 des Statorelementes 3 angeordnet und vollständig überlappend mit der Innenseite 15 ausgebildet.

Fig. 5 zeigt eine Gehäuseeinrichtung 27 der Drehmomentsensorvorrichtung 1. Die Gehäuseeinrichtung 27 weist ein ringförmiges Gehäuseelement 28 auf, in welchem der Magnetfeldsensor 11 und die Flussleitelemente 12, 13 angeordnet sind. Das Flussleitelement 12 kann dabei von einem hohlzylinderförmigen Schutzelement 29 des ringförmigen Gehäuseelements 28 umgeben sein, welches sich in axialer Richtung Fₐ erstreckt. Das Gehäuseelement 28 weist hier an einer radial innen liegenden Kante einen sich in axialer Richtung Fₐ hohlzylinderförmig erstreckenden Bereich 30 auf, welcher zum Aufnehmen des ringförmigen Magneten 10 und der verzahnten Zahnelemente 7,8 der Statorelemente 3,4 ausgebildet ist. Das Gehäuseelement 28 ist an einer radial außen liegenden Kante von einem ringförmigen Halteelement 31 umgeben, welches zum Halten der Statorelemente 3, 4 ausgebildet ist.

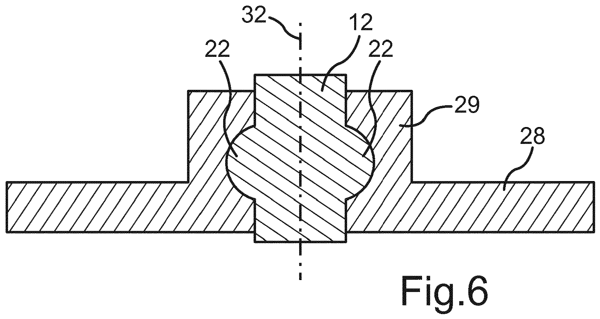

Fig. 6 zeigt einen Querschnitt durch das Gehäuseelement 28 entlang der Querschnittslinie 32. Das Flussleitelement 12 kann in dem Gehäuseelement 28 mit einer Vergussmasse umspritzt sein. Durch das als Erhebung 22 ausgebildete Befestigungselement 20 kann eine formschlüssige Verbindung mit dem Gehäuseelement 28 ausgebildet werden.

## Patentansprüche

1. Drehmomentsensorvorrichtung (1) für ein Kraftfahrzeug (33) zum Erfassen eines Drehmoments an einer Welle (34) des Kraftfahrzeugs (33), mit einem Stator (2) zum Anordnen an einer ersten Teilwelle (36) der Welle (34), wobei der Stator (2) zwei ringförmige Statorelemente (3, 4) mit jeweiligen radial zu einer Längsachse (L) der Drehmomentsensorvorrichtung (1) nach außen geführten, einander unter Ausbildung eines Zwischenraums (Z) axial gegenüberliegenden Randbereichen (5, 6) aufweist, mit einem ringförmigen, von dem Stator (2) umgebenen Magneten (10) zum Anordnen an einer zweiten Teilwelle (37) der Welle (34) und mit einer in dem Zwischenraum (Z) angeordneten Magnetfeldsensoreinrichtung (9), welche zumindest einen Magnetfeldsensor (11) zum Erfassen eines magnetischen Flusses und zumindest zwei Flussleitelemente (12, 13) zum Führen des magnetischen Flusses von dem jeweiligen Statorelement (3, 4) zu dem Magnetfeldsensor (11) aufweist, wobei die Flussleitelemente (12, 13) in dem Zwischenraum (Z) in axialer Richtung (Fₐ) orientiert und entlang der axialen Richtung (Fₐ) stabförmig ausgebildet sind,
wobei jedes Flussleitelement zumindest ein Befestigungselement (20, 21) zum Halten des Flussleitelementes (12, 13) in einem Gehäuseelement (28) der Magnetfeldsensoreinrichtung (9) aufweist, wobei die Flussleitelemente (12, 13) in axialer Richtung (Fₐ) verbiegungsfrei ausgebildet sind,
**dadurch gekennzeichnet, dass**
das zumindest eine Befestigungselement (20, 21) einteilig mit dem jeweiligen Flussleitelement (12, 13) ausgebildet ist, wobei das Befestigungselement (20) als Hinterschneidung ausgeführt ist, durch welche eine formschlüssige und/oder kraftschlüssige Verbindung zwischen dem Flussleitelement (12, 13) und dem Gehäuseelement (28) herstellbar ist.

2. Drehmomentsensorvorrichtung (1) nach Anspruch 1,
**dadurch gekennzeichnet, dass**
die stabförmigen Flussleitelemente (12, 13) zylinderförmig ausgebildet sind.

3. Drehmomentsensorvorrichtung (1) nach Anspruch 1,
**dadurch gekennzeichnet, dass**
die stabförmigen Flussleitelemente (12, 13) quaderförmig ausgebildet sind.

4. Drehmomentsensorvorrichtung (1) nach Anspruch 1,
**dadurch gekennzeichnet, dass**
die stabförmigen Flussleitelemente (12, 13) kegelstumpfförmig ausgebildet sind.

5. Drehmomentsensorvorrichtung (1) nach Anspruch 1,
**dadurch gekennzeichnet, dass**
die stabförmigen Flussleitelemente (12, 13) pyramidenstumpfförmig ausgebildet sind.

6. Drehmomentsensorvorrichtung (1) nach einem der vorhergehenden Ansprüche,
**dadurch gekennzeichnet, dass**
die Magnetfeldsensoreinrichtung (9) zumindest zwei plattenförmige Flächenvergrößerungselemente (25) mit jeweils einer im Vergleich zu einer den Randbereichen (5, 6) zugewandten Grundfläche (14, 16) der Flussleitelemente (12, 13) größeren Fläche (26a) aufweist, wobei jedes Flussleitelement (12, 13) mit einem der Flächenvergrößerungselemente (25) verbunden ist und wobei jeweils ein Flächenvergrößerungselement (25) beabstandet und vollständig überlappend mit einer dem Zwischenraum (Z) zugewandten Innenseite (15, 17) des jeweiligen Randbereiches (5, 6) des Statorelementes (3, 4) ausgebildet ist.

7. Drehmomentsensorvorrichtung (1) nach Anspruch 6,
**dadurch gekennzeichnet, dass**
eine Form der Fläche (26) der plattenförmigen Flächenvergrößerungselemente (25) einer Form der Grundfläche (14, 16) der Flussleitelemente (12, 13) entspricht.

8. Drehmomentsensorvorrichtung (1) nach Anspruch 6,
**dadurch gekennzeichnet, dass**
die plattenförmigen Flächenvergrößerungselemente (25) ringsegmentförmig ausgebildet sind.

9. Drehmomentsensorvorrichtung (1) nach einem der Ansprüche 6 bis 8,
**dadurch gekennzeichnet, dass**
die Magnetfeldsensoreinrichtung (9) zumindest zwei Magnetfeldsensoren (11) aufweist und auf jedem der plattenförmigen Flächenvergrößerungselemente (25) zumindest zwei Flussleitelemente (12, 13) angeordnet sind, wobei jedes der Flussleitelemente (12, 13) eines Flächenvergrößerungselementes (25) dazu ausgelegt ist, den magnetischen Fluss von dem jeweiligen Statorelement (3, 4) zu einem der Magnetfeldsensoren (11) zu führen.

10. Drehmomentsensorvorrichtung (1) nach einem der vorangehenden Ansprüche,
**dadurch gekennzeichnet, dass**
das Befestigungselement (20, 21) als eine das Flussleitelement (12, 13) in radialer Richtung (Fᵣ) umlaufende Rille (24) in einer Außenfläche (23) des Flussleitelementes (12, 13) ausgebildet ist.

11. Drehmomentsensorvorrichtung (1) nach einem der vorangehenden Ansprüche,
**dadurch gekennzeichnet, dass**
das Befestigungselement (20, 21) als eine Erhebung (22) in einer Außenfläche (23) des Flussleitelementes (12, 13) ausgebildet ist.

12. Drehmomentsensorvorrichtung (1) nach einem der vorhergehenden Ansprüche,
**dadurch gekennzeichnet, dass**
die Drehmomentsensorvorrichtung (1) eine ringförmige Gehäuseeinrichtung (27) mit einem ringförmigen Gehäuseelement (28) und einem das ringförmige Gehäuseelement (28) umgebenden ringförmigen Halteelement (31) aufweist, wobei die Magnetfeldsensoreinrichtung (9) in dem Gehäuseelement (28) angeordnet ist und die Statorelemente (3, 4) an dem ringförmigen Halteelement (31) angeordnet sind.

13. Elektrisches Lenksystem (35) für ein Kraftfahrzeug (33) mit einer Lenkwelle (34) aufweisend eine erste Teilwelle (36) und eine zweite Teilwelle (37), wobei die Teilwellen (36, 37) über einen Torsionsstab (38) miteinander verbunden sind, und mit einer Drehmomentsensorvorrichtung (1) nach einem der vorhergehenden Ansprüche, wobei der Stator (2) der Drehmomentsensorvorrichtung an der ersten Teilwelle (36) angeordnet ist und der Magnet (10) der Drehmomentsensorvorrichtung (1) an der zweiten Teilwelle (37) angeordnet ist.

14. Kraftfahrzeug (33) mit einem elektrischen Lenksystem (35) nach Anspruch 13.

## Claims

1. Torque sensor device (1) for a motor vehicle (33) for sensing a torque at a shaft (34) of the motor vehicle (33), having a stator (2) for arrangement on a first component-shaft (36) of the shaft (34), wherein the stator (2) has two annular stator elements (3, 4) with respective edge regions (5, 6) which are guided outward radially with respect to a longitudinal axis (L) of the torque sensor device (1) and lie axially opposite one another to form an intermediate space (Z), with an annular magnet (10) which is surrounded by the stator (2), for arrangement on a second component-shaft (37) of the shaft (34), and with a magnetic field sensor device (9) which is arranged in the intermediate space (Z) and has at least one magnetic field sensor (11) for sensing a magnetic flux and at least two flux-directing elements (12, 13) for directing the magnetic flux from the respective stator element (3, 4) to the magnetic field sensor (11), wherein the flux-directing elements (12, 13) in the intermediate space (Z) are oriented in an axial direction (Fₐ) and are formed in a rod shape along the axial direction (Fₐ),
wherein each flux-directing element has at least one attachment element (20, 21) for securing the flux-directing element (12, 13) in a housing element (28) of the magnetic field sensor device (9), wherein the flux-directing elements (12, 13) are formed without bends in the axial direction (Fₐ),
**characterized in that**
the at least one attachment element (20, 21) is embodied in one piece with the respective flux-directing element (12, 13), wherein the attachment element (20) is embodied as an undercut, by which a positively locking and/or frictionally locking connection can be established between the flux-directing element (12, 13) and the housing element (28).

2. Torque sensor device (1) according to Claim 1,
**characterized in that**
the rod-shaped flux-directing elements (12, 13) are embodied in a cylindrical shape.

3. Torque sensor device (1) according to Claim 1,
**characterized in that**
the rod-shaped flux-directing elements (12, 13) are embodied in a square shape.

4. Torque sensor device (1) according to Claim 1,
**characterized in that**
the rod-shaped flux-directing elements (12, 13) are embodied in a truncated cone shape.

5. Torque sensor device (1) according to Claim 1,
**characterized in that**
the rod-shaped flux-directing elements (12, 13) are embodied in a truncated pyramid shape.

6. Torque sensor device (1) according to one of the preceding claims,
**characterized in that**
the magnetic field sensor device (9) has at least two plate-shaped surface enlargement elements (25), each with a surface (26a) which is larger in comparison with a base surface (14, 16), facing the edge regions (5, 6), of the flux-directing elements (12, 13), wherein each flux-directing element (12, 13) is connected to one of the surface enlargement elements (25), and wherein in each case one surface enlargement element (25) is formed spaced apart and completely overlapping with an inner side (15, 17), facing the intermediate space (Z), of the respective edge region (5, 6) of the stator element (3, 4).

7. Torque sensor device (1) according to Claim 6,
**characterized in that**
a shape of the surface (26) of the plate-shaped surface enlargement element (25) corresponds to a shape of the base surface (14, 16) of the flux-directing elements (12, 13).

8. Torque sensor device (1) according to Claim 6,
**characterized in that**
the plate-shaped surface enlargement elements (25) are embodied in an annular segment shape.

9. Torque sensor device (1) according to one of Claims 6 to 8,
**characterized in that**
the magnetic field sensor device (9) has at least two magnetic field sensors (11), and at least two flux-directing elements (12, 13) are arranged on each of the plate-shaped surface enlargement elements (25), wherein each of the flux-directing elements (12, 13) of a surface enlargement element (25) is configured to direct the magnetic flux from the respective stator element (3, 4) to one of the magnetic field sensors (11).

10. Torque sensor device (1) according to one of the preceding claims,
**characterized in that**
the attachment element (20, 21) is embodied as a groove (24) which runs around the flux-directing element (12, 13) in the radial direction (Fᵣ), in an outer surface (23) of the flux-directing element (12, 13).

11. Torque sensor device (1) according to one of the preceding claims,
**characterized in that**
the attachment element (20, 21) is embodied as an elevated portion (22) in an outer surface (23) of the flux-directing element (12, 13).

12. Torque sensor device (1) according to one of the preceding claims,
**characterized in that**
the torque sensor device (1) has an annular housing device (27) with an annular housing element (28) and an annular securing element (31) which surrounds the annular housing element (28), wherein the magnetic field sensor device (9) is arranged in the housing element (28), and the stator elements (3, 4) are arranged on the annular securing element (31).

13. Electric steering system (35) for a motor vehicle (33) with a steering shaft (34), having a first component-shaft (36) and a second component-shaft (37), wherein the component-shafts (36, 37) are connected to one another via a torsion rod (38), and with a torque sensor device (1) according to one of the preceding claims, wherein the stator (2) of the torque sensor device is arranged on the first component-shaft (36), and the magnet (10) of the torque sensor device (1) is arranged on the second component-shaft (37).

14. Motor vehicle (33) having an electric steering system (35) according to Claim 13.

## Revendications

1. Dispositif de détection de couple (1) pour un véhicule automobile (33) destiné à déterminer un couple au niveau d'un arbre (34) du véhicule automobile (33), comprenant un stator (2) destiné à être agencé au niveau d'un premier arbre partiel (36) de l'arbre (34), le stator (2) comprenant deux éléments de stator annulaires (3, 4) dotés de régions de bord (5, 6) respectives guidées vers l'extérieur radialement par rapport à un axe longitudinal (L) du dispositif de détection de couple (1), opposées axialement l'une de l'autre en formant un espace intermédiaire (Z), comprenant un aimant annulaire (10), entouré par le stator (2), destiné à être agencé au niveau d'un deuxième arbre partiel (37) de l'arbre (34) et comprenant un appareil de détection de champ magnétique (9) agencé dans l'espace intermédiaire (Z), qui comprend au moins un détecteur de champ magnétique (11) pour déterminer un flux magnétique et au moins deux éléments de conduction de flux (12, 13) pour le guidage du flux magnétique à partir de l'élément de stator respectif (3, 4) jusqu'au détecteur de champ magnétique (11), les éléments de conduction de flux (12, 13) étant orientés dans la direction axiale (Fₐ) dans l'espace intermédiaire (Z) et étant configurés sous forme de barres le long de la direction axiale (Fₐ),
chaque élément de conduction de flux comprenant au moins un élément de fixation (20, 21) pour le maintien de l'élément de conduction de flux (12, 13) dans un élément de boîtier (28) de l'appareil de détection de champ magnétique (9), les éléments de conduction de flux (12, 13) étant configurés sans flexion dans la direction axiale (Fₐ),
**caractérisé en ce que**
ledit au moins un élément de fixation (20, 21) est configuré d'un seul tenant avec l'élément de conduction de flux respectif (12, 13), l'élément de fixation (20) étant réalisé sous la forme d'une contre-dépouille, par laquelle une liaison par accouplement de forme et/ou par accouplement de force peut être créée entre l'élément de conduction de flux (12, 13) et l'élément de boîtier (28).

2. Dispositif de détection de couple (1) selon la revendication 1, **caractérisé en ce que** les éléments de conduction de flux en forme de barres (12, 13) sont configurés sous forme cylindrique.

3. Dispositif de détection de couple (1) selon la revendication 1, **caractérisé en ce que** les éléments de conduction de flux en forme de barres (12, 13) sont configurés sous forme parallélépipédique.

4. Dispositif de détection de couple (1) selon la revendication 1, **caractérisé en ce que** les éléments de conduction de flux en forme de barres (12, 13) sont configurés sous forme tronconique.

5. Dispositif de détection de couple (1) selon la revendication 1, **caractérisé en ce que** les éléments de conduction de flux en forme de barres (12, 13) sont configurés sous forme de pyramide tronquée.

6. Dispositif de détection de couple (1) selon l'une quelconque des revendications précédentes, **caractérisé en ce que** l'appareil de détection de champ magnétique (9) comprend au moins deux éléments d'agrandissement de surfaces en forme de plaques (25) chacun munis d'une plus grande surface (26a) en comparaison d'une surface de base (14, 16), tournée vers les zones de bord (5, 6), des éléments de conduction de flux (12, 13), chaque élément de conduction de flux (12, 13) étant relié avec un des éléments d'agrandissement de surface (25) et un élément d'agrandissement de surface (25) étant respectivement configuré sous forme espacée et chevauchant entièrement un côté intérieur (15, 17), tourné vers l'espace intermédiaire (Z), de la zone de bord respective (5, 6) de l'élément de stator (3, 4).

7. Dispositif de détection de couple (1) selon la revendication 6, **caractérisé en ce qu'**une forme de la surface (26) des éléments d'agrandissement de surface en forme de plaques (25) correspond à une forme de la surface de base (14, 16) des éléments de conduction de flux (12, 13).

8. Dispositif de détection de couple (1) selon la revendication 6, **caractérisé en ce que** les éléments d'agrandissement de surface en forme de plaques (25) sont configurés sous la forme de segments annulaires.

9. Dispositif de détection de couple (1) selon l'une quelconque des revendications 6 à 8, **caractérisé en ce que** l'appareil de détection de champ magnétique (9) comprend au moins deux détecteurs de champ magnétique (11) et au moins deux éléments de conduction de flux (12, 13) sont agencés sur chacun des éléments d'agrandissement de surface en forme de plaques (25), chacun des éléments de conduction de flux (12, 13) d'un élément d'agrandissement de surface (25) étant conçu pour guider le flux magnétique à partir de l'élément de stator respectif (3, 4) jusqu'à un des détecteurs de champ magnétique (11).

10. Dispositif de détection de couple (1) selon l'une quelconque des revendications précédentes, **caractérisé en ce que** l'élément de fixation (20, 21) est configuré sous la forme d'une rainure (24) encerclant l'élément de conduction de flux (12, 13) dans la direction radiale (Fᵣ) dans une surface extérieure (23) de l'élément de conduction de flux (12, 13).

11. Dispositif de détection de couple (1) selon l'une quelconque des revendications précédentes, **caractérisé en ce que** l'élément de fixation (20, 21) est configuré sous la forme d'un soulèvement (22) dans une surface extérieure (23) de l'élément de conduction de flux (12, 13) .

12. Dispositif de détection de couple (1) selon l'une quelconque des revendications précédentes, **caractérisé en ce que** le dispositif de détection de couple (1) comprend un appareil de boîtier annulaire (27) comprenant un élément de boîtier annulaire (28) et un élément de maintien annulaire (31) entourant l'élément de boîtier annulaire (28), l'appareil de détection de champ magnétique (9) étant agencé dans l'élément de boîtier (28) et les éléments de stator (3, 4) étant agencés au niveau de l'élément de maintien annulaire (31) .

13. Système de direction électrique (35) pour un véhicule automobile (33) comprenant un arbre de direction (34) comprenant un premier arbre partiel (36) et un deuxième arbre partiel (37), les arbres partiels (36, 37) étant reliés l'un avec l'autre par l'intermédiaire d'une barre de torsion (38), et comprenant un dispositif de détection de couple (1) selon l'une quelconque des revendications précédentes, le stator (2) du dispositif de détection de couple étant agencé au niveau du premier arbre partiel (36) et l'aimant (10) du dispositif de détection de couple (1) étant agencé au niveau du deuxième arbre partiel (37).

14. Véhicule automobile (33) comprenant un système de direction électrique (35) selon la revendication 13.
